(19) Europäisches Patentamt
European Patent Office
Office européen des brevets

(11) **EP 3 508 593 A1**

(12) **EUROPEAN PATENT APPLICATION**
published in accordance with Art. 153(4) EPC

(43) Date of publication:
**10.07.2019 Bulletin 2019/28**

(51) Int Cl.:
***C22B 59/00*** (2006.01)  ***C22B 1/02*** (2006.01)
***C22B 3/44*** (2006.01)

(21) Application number: **17846247.9**

(86) International application number:
**PCT/JP2017/030119**

(22) Date of filing: **23.08.2017**

(87) International publication number:
**WO 2018/043242 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.08.2016 JP 2016168480**
**21.08.2017 JP 2017158659**

(71) Applicant: **Sumitomo Metal Mining Co., Ltd.
Tokyo 105-8716 (JP)**

(72) Inventors:
• **HIGAKI Tatsuya
Niihama-shi
Ehime 792-0002 (JP)**
• **KOBAYASHI Hiroshi
Niihama-shi
Ehime 792-0002 (JP)**

(74) Representative: **Jones, Nicholas Andrew
Withers & Rogers LLP
4 More London Riverside
London, SE1 2AU (GB)**

(54) **METHOD FOR PRODUCING SCANDIUM COMPOUND, AND SCANDIUM COMPOUND**

(57)     Provided is a method for producing, from scandium oxalate crystals obtained through an oxalate conversion process, a readily-soluble scandium compound that dissolves easily in an aqueous solution such as an acid. This method for producing a scandium compound involves carrying out an oxalate conversion process using oxalic acid in a solution containing scandium, separating the product obtained through the oxalate conversion process into a liquid and scandium oxalate crystals, and obtaining a scandium compound by roasting the obtained scandium oxalate crystals at a temperature of 400°C to 800°C, preferably 400°C to 600°C.

FIG.2

EP 3 508 593 A1

**Description**

TECHNICAL FIELD

The present invention relates to a method for producing a scandium compound. More specifically, the present invention relates to a method by which a readily-soluble scandium compound to be easily dissolved in an aqueous solution of an acid or the like can be produced and a scandium compound obtained by the production method.

BACKGROUND ART

In recent years, the high pressure acid leaching (HPAL) process has been emerging as a practical method, in which nickel oxide ore is introduced into a pressurized vessel together with sulfuric acid, subjected to a leaching treatment by being heated at a high temperature of about 240°C to 260°C, and thus separated into a leachate containing nickel and a leach residue.

Nickel oxide ore contains scandium in a trace amount in addition to valuable elements such as nickel and cobalt. Scandium is extremely useful as an additive for a high strength alloy and an electrode material for a fuel cell and is expected to be widely used in various fields in the future, and a process for effectively recovering scandium from nickel oxide ore has been investigated.

In the case of using the HPAL process, scandium contained in the nickel oxide ore is contained in the leachate together with nickel (see, for example, Patent Document 1). Moreover, it is possible to effectively separate nickel and scandium from each other since scandium remains in the acidic solution after addition of sulfurizing agent while nickel in the solution is recovered as nickel sulfide when a neutralizing agent is added to the leachate obtained to separate impurities and then a sulfurizing agent is added to the remaining leachate to cause a sulfuration reaction.

Nickel sulfide obtained by the HPAL process can be purified, for example, by being leached into an acid by an existing nickel refinement process and further using means such as solvent extraction or ion exchange or can be subjected to electrolytic winning to obtain a product such as a nickel salt compound or electric nickel. These can be effectively utilized as a material for a nickel hydride battery, an anode for plating, and a raw material for stainless steel.

Meanwhile, the acidic solution after addition of a sulfurizing agent described above, for example, can be subjected to an ion exchange treatment to enrich scandium and subsequently to a method such as solvent extraction or oxalate conversion and precipitation to be formed into a solid as well as to separate a large amount of impurity components coexisting in the solution, and then the scandium oxalate crystals obtained by the oxalate conversion and precipitation method can be roasted to recover scandium in the form of scandium oxide to be easily utilized.

However, scandium oxalate and scandium oxide are generally poorly soluble in an aqueous solution, and thus it is required to dissolve these scandium compounds under high temperature or to dissolve these scandium compounds using an acid at a high concentration, for example, in order to obtain a scandium-containing solution for easy utilization. For this reason, there has been a possibility that the cost increases and there is a risk in terms of safety.

Patent Document 1: Japanese Unexamined Patent Application, Publication No. 2014-218719

DISCLOSURE OF THE INVENTION

Problems to be Solved by the Invention

The present invention is made in view of the above actual circumstances. An object of the present invention is to provide a method for obtaining a readily-soluble scandium compound which is easily dissolved in an aqueous solution of an acid or the like.

Means for Solving the Problems

The present inventors have conducted extensive studies to solve the aforementioned problems. As a result, the present inventors have found out that a scandium compound which is readily soluble in an aqueous solution of an acid or the like can be obtained by subjecting scandium oxalate crystals obtained by an oxalate conversion treatment to a calcination treatment in a lower temperature region as compared with the conventional roasting temperature to form scandium oxide. Then the present invention has been completed.

(1) A first embodiment of the present invention provides a method for producing a scandium compound, including:

subjecting a solution containing scandium to an oxalate conversion treatment using oxalic acid to separate the solution into a liquid and a scandium oxalate crystal; and

subjecting the scandium oxalate crystal obtained to a calcination treatment under a temperature condition in a range of between 400°C or more and 600°C or less to obtain a scandium compound.

(2) A second embodiment of the present invention provides a method for producing a scandium compound, including:

subjecting a solution containing scandium to an oxalate conversion treatment using oxalic acid to separate the solution into a liquid and a scandium oxalate crystal; and
subjecting the scandium oxalate crystal obtained to a calcination treatment under a temperature condition in a range of between 400°C or more and 800°C or less to obtain a scandium compound.

(3) A third embodiment of the present invention provides the method for producing a scandium compound according to the first or second embodiment, in which the scandium oxalate crystal is retained for 1 hour or more and 12 hours or less to be calcined in the calcination treatment.
(4) A fourth embodiment of the present invention provides the method for producing a scandium compound according to any one of the first to third embodiments, in which a weight decrease rate of the scandium compound obtained by the calcination treatment with respect to a weight of the scandium oxalate crystal before the calcination treatment is in a range of between 55% or more and 65% or less.
(5) A fifth embodiment of the present invention provides the method for producing a scandium compound according to any one of the first to fourth embodiments, in which the solution containing scandium is obtained by subjecting a solution containing scandium to an ion exchange treatment and/or a solvent extraction treatment.
(6) A sixth embodiment of the present invention provides a scandium compound, in which a half peak width at a diffraction angle 2θ of 12.3° measured by an X-ray diffraction method is 0.2 or more or is not detected and a half peak width at a diffraction angle 2θ of 31.4° is 0.2 or more or is not detected.
(7) A seventh embodiment of the present invention provides the scandium compound according to the sixth embodiment, in which a crystallite diameter calculated from the half peak width at a diffraction angle 2θ of 12.3° or 31.4° based on Scherrer equation is 350 Å or less.
(8) An eighth embodiment of the present invention provides the scandium compound according to the sixth or seventh embodiment, in which a BET specific surface area of the scandium compound is 70 $m^2$/g or more and a peak intensity of scandium oxide measured by an X-ray diffraction method is 11000 counts or less.

Effects of the Invention

According to the present invention, it is possible to obtain a readily-soluble scandium compound which is easily dissolved in an aqueous solution of an acid or the like and it is possible to diminish the labor, the cost of chemicals, and the like upon the dissolution of the scandium compound as compared with the conventional case.

BRIEF DESCRIPTION OF THE DRAWINGS

Fig. 1 is a graphic representation showing the relation between the calcination temperature and the weight decrease rate of a scandium compound obtained through calcination.
Fig. 2 is a graphic representation showing the relation between the calcination temperature and the leach rate of a scandium compound obtained through calcination into sulfuric acid.
Fig. 3 is a graphic representation showing the relation between the weight decrease rate by calcination and the leach rate of a scandium compound obtained through calcination into sulfuric acid.
Fig. 4 is a diagram for illustrating the results on the X-ray diffraction (XRD) measurement of the respective scandium compounds obtained when the calcination time (retention time) is set to 1 hour and the calcination temperature is set to 350°C, 400°C, 600°C, and 700°C.
Fig. 5 is a graphic representation showing the relation between the calcination temperature and the half peak width of a scandium compound obtained through calcination.
Fig. 6 is a graphic representation showing the relation between the calcination temperature and the crystallite diameter of a scandium compound obtained through calcination. Fig. 7 is a graphic representation showing the measurement results on the BET specific surface area of a scandium compound obtained through calcination with respect to the calcination temperature.
Fig. 8 is a graphic representation showing the relation between the half peak width and leach rate of a scandium compound obtained through calcination with respect to the calcination temperature.

PREFERRED MODE FOR CARRYING OUT THE INVENTION

Below, specific embodiments of the present invention (hereinafter referred to as the "present embodiments") will be described in more detail. Note that the present invention shall not be limited to the following embodiments and can be implemented with appropriate modifications made without departing from the spirit of the present invention. In addition, in the present specification, the notation "X to Y" (X and Y are arbitrary numerical values) means "X or more and Y or less".

<<1. Overview>>

The method for producing a scandium compound according to the present embodiment is a method for obtaining a scandium compound from a scandium oxalate crystal obtained by subjecting a solution containing scandium to an oxalate conversion treatment using oxalic acid.

Specifically, in this method for producing a scandium compound, a scandium oxalate crystal is calcined under a temperature condition in a range of between 400°C or more and 600°C or less.

In addition, in this method for producing a scandium compound, a scandium oxalate crystal is calcined under a temperature condition in a range of between 400°C or more and 800°C or less.

According to such a method, it is possible to effectively obtain a readily-soluble scandium compound which is easily dissolved in an aqueous solution of an acid or the like from a scandium oxalate crystal and it is possible to effectively diminish the labor, the cost of chemicals, and the like upon the dissolution of the scandium compound as compared with the conventional case.

As the solution containing scandium (hereinafter also referred to as the "scandium-containing solution") to be subjected to the oxalate conversion treatment, a solution (acidic solution of sulfuric acid) obtained by subjecting a leachate obtained by the high pressure acid leaching (HPAL) treatment of nickel oxide ore to a sulfuration treatment to separate nickel therefrom and subjecting the post-sulfuration liquid thus obtained to an ion exchange treatment and/or a solvent extraction treatment to separate impurities therefrom and enrich scandium therein can be used.

There is no particular limitation for the ion exchange treatment of the scandium-containing solution such as the post-sulfuration liquid obtained through the HPAL process of nickel oxide ore. Examples thereof may include a treatment using a resin having iminodiacetic acid as a functional group as a chelating resin. Examples thereof may include a treatment which includes an adsorption step of bringing the post-sulfuration liquid into contact with a chelating resin to adsorb scandium onto the chelating resin; an aluminum removing step of bringing sulfuric acid into contact with the chelating resin to remove aluminum adsorbed on the chelating resin; a scandium elution step of bringing sulfuric acid into contact with the chelating resin which has been subjected to the aluminum removing step to obtain a scandium eluate; and a chromium removing step of bringing sulfuric acid into contact with the chelating resin which has been subjected to the scandium elution step to remove chromium which has been adsorbed onto the chelating resin in the adsorption step as specific treatment steps, for example, in the case of using the post-sulfuration liquid as a target for the treatment.

In addition, there is also no particular limitation for the solvent extraction treatment, and the scandium eluate obtained through the ion exchange treatment as described above can be subjected to a solvent extraction treatment using an amine-based extractant, a phosphoric acid-based extractant, or the like. Examples thereof may include a treatment including: an extraction step of mixing the scandium eluate with an extractant and separating the mixture into a post-extraction organic solvent into which impurities have been extracted and a raffinate liquid containing scandium; a scrubbing step of mixing the post-extraction organic solvent with a hydrochloric acid solution or a sulfuric acid solution to separate scandium which is contained in the post-extraction organic solvent in a trace amount; and a backward extraction step of mixing the post-washing organic solvent with a backward extraction starting liquid to perform backward extraction of impurities from the post-washing organic solvent and to obtain a backward extraction liquid.

In the scandium-containing solution obtained by performing the ion exchange treatment and/or the solvent extraction treatment in this way, the impurity components are decreased and scandium is enriched in the solution, and thus the scandium compound obtained from the scandium-containing solution through the oxalate conversion treatment and the calcination has a higher scandium content.

<<2. Oxalate conversion treatment and calcination treatment>>

The method for producing a scandium compound according to the present embodiment is a method in which a scandium-containing solution is subjected to an oxalate conversion treatment using oxalic acid and then the scandium oxalate crystal obtained is calcined to obtain a scandium compound as described above.

(Oxalate conversion treatment)

Specifically, the oxalate conversion treatment is a treatment in which the scandium-containing solution is subjected to a reaction to convert scandium into an oxalate (scandium oxalate) using oxalic acid. By converting scandium into an oxalate salt in this way, it is possible to improve handling properties such as filterability and to efficiently recover scandium.

As a method of oxalate conversion treatment, it is possible to use a method in which oxalic acid is added to the scandium-containing solution to generate and precipitate a solid crystal of scandium oxalate based on scandium in the scandium-containing solution. At this time, the oxalic acid to be used may be a solid or a solution. Note that, in this method of oxalate conversion treatment, it is preferable to subject the scandium-containing solution to an oxidation treatment by adding an oxidizing agent to the scandium-containing solution and thus controlling the oxidation-reduction potential (ORP, reference electrode: silver/silver chloride) to be in the range of about 500 mV to 600 mV prior to the oxalate conversion treatment in order to prevent precipitation of iron(II) oxalate in a case in which divalent iron ions are contained in the scandium-containing solution as an impurity component.

Alternatively, as a method of oxalate conversion treatment, it is possible to use a method in which a scandium-containing solution is gradually added into an oxalic acid solution filled in a reaction vessel to generate and precipitate a solid crystal of scandium oxalate. At this time, it is preferable to adjust the pH of the scandium-containing solution to a range of between -0.5 or more and 1 or less prior to the oxalate conversion treatment. According to such a method of oxalate conversion treatment, it is possible to prevent precipitation of iron(II) oxalate and the like and it is also possible to recover scandium having a higher purity without using an expensive oxidizing agent and the like.

Upon the oxalate conversion treatment, the temperature of the scandium-containing solution which is a target of the treatment is preferably adjusted to the range of between 50°C or more and 80°C or less and more preferably adjusted to the range of between 55°C or more and 70°C or less.

In addition, it is preferable to use, as oxalic acid to be used in the treatment, oxalic acid in an amount to be in the range of 1.05 times to 1.2 times the equivalent amount required to precipitate scandium in the scandium-containing solution as an oxalate. When the amount of oxalic acid used is less than 1.05 times the equivalent amount required, there is a possibility that the entire amount of scandium cannot be effectively recovered. On the other hand, it is not preferable that the amount of oxalic acid used exceeds 1.2 times the equivalent amount required since scandium is redissolved and the recovery rate thereof decreases by an increase in the solubility of scandium oxalate and the amount of oxidizing agent such as sodium hypochlorite used increases in order to decompose excessive oxalic acid.

The scandium oxalate crystals obtained by such an oxalate conversion treatment can be recovered by performing a filtration and washing treatment.

(Calcination treatment)

Next, the calcination treatment is a treatment in which the scandium oxalate crystals obtained are calcined at a predetermined temperature. Although this will be described in detail later, in the present embodiment, calcination is performed by setting the calcination temperature to the range of between 400°C or more and 800°C or less in this calcination treatment. This makes it possible to obtain a scandium compound which is readily soluble in an aqueous solution of an acid or the like as a calcined product.

Specifically, in the calcination treatment, the scandium oxalate crystals obtained by the oxalate conversion treatment are washed with water, dried, and then calcined by using a predetermined furnace. There is no particular limitation for the furnace, but examples thereof may include a tubular furnace. It is industrially preferable to use a continuous furnace such as a rotary kiln since both drying and calcination can be performed with the same equipment.

In addition, there is no particular limitation for the retention time when performing calcination at a calcination temperature of 400°C or more and 800°C or less, but it is preferably 0.5 hours or more and 12 hours or less, more preferably 1 hour or more and 12 hours or less, and particularly preferably 1 hour or more and 6 hours or less. When the retention time is less than 0.5 hours, sufficient calcination does not proceed and there is a possibility that a large amount of poorly-soluble scandium oxalate remains. On the other hand, when the retention time exceeds 12 hours, the readily soluble property of the scandium compound to be obtained is almost unchanged or is rather gradually diminished in some cases and the treatment cost also increases since the thermal energy increases.

<<3. Method for producing scandium compound (condition of calcination treatment)>>

Conventionally, scandium is often handled in the form of scandium oxide ($Sc_2O_3$), and scandium oxide is obtained by roasting a solid containing scandium at a high temperature of 900°C or more and preferably about 1100°C. However, scandium oxide obtained through roasting at such a high temperature is poorly soluble in an aqueous solution of an acid or the like.

According to the study of the present inventors, it has been found out that a readily-soluble scandium compound in an aqueous solution of an acid or the like can be obtained by subjecting scandium oxalate crystals to a calcination treatment under a condition in the range of between 400°C or more and 800°C or less which is a lower temperature region than the conventional temperature region. Moreover, the weight decrease rate of the readily-soluble scandium compound to be obtained in this way with respect to the weight of the scandium oxalate crystals before the calcination treatment is in the range of between 55% or more and 65% or less.

Note that the weight decrease rate refers to the proportion of weight decrease by calcination and can be expressed by the following Equation [1] based on the difference in weight before and after calcination.

$$\text{Weight decrease rate (\%)} = (1 - \text{weight of substance after}$$
$$\text{calcination/weight of substance before calcination}) \times 100 \ldots$$
$$[1]$$

Here, in a case in which scandium oxide ($Sc_2O_3$; molecular weight: 137.92) is obtained by calcining scandium oxalate ($Sc_2C_6O_{12}$; molecular weight: 353.92), the weight decrease rate before and after calcination is theoretically (1 - 137.92/353.92) $\times$ 100 = 61%. However, the present inventors have found out that there is a region having a readily soluble form when poorly-soluble scandium oxalate is heated and decomposed into poorly-soluble scandium oxide since the weight decrease rate is distributed in the range of between 55% or more and 65% or less in a readily-soluble scandium compound obtained by performing a calcination treatment under a condition in the range of between 400°C or more and 800°C or less.

In other words, it is considered that this scandium compound exhibiting readily soluble property is not a compound in a state in which the scandium oxalate crystals of a raw material are completely decomposed by calcination and thus the entire amount thereof is converted into scandium oxide but is a compound in a state in which scandium oxalate partially remains or $CO_2$ and CO which are generated by decomposition remain.

The scandium compound in such a region exhibiting readily soluble property does not have a characteristic diffraction peak particularly on the lower temperature limit side exhibiting more readily soluble property even when being subjected to X-ray diffraction analysis as to be described later, and it is thus difficult to specify the form of the compound. For this reason, the compound in the readily soluble region is collectively referred to simply as the "scandium compound".

Moreover, the scandium oxalate crystals are calcined under a temperature condition in the range of between 400°C or more and 800°C or less, preferably under a temperature condition in the range of between 400°C or more and 600°C or less, and more preferably under a temperature condition in the range of between 400°C or more and 500°C or less as the conditions for generating such a readily-soluble scandium compound. In other words, such a readily-soluble scandium compound is obtained by calcining the scandium oxalate crystals under conditions so that the weight decrease rate by calcination is in the range of between 55% or more and 65% or less and more preferably about 60%.

Note that, in the readily-soluble scandium compound, the weight decrease rate thereof is in the range of between 55% or more and 65% or less and there is a case in which the weight decrease rate is larger than 61% which is the theoretical weight decrease rate by calcination from scandium oxalate to scandium oxide. It is considered that this is caused by the influence of impurity components contained in the scandium oxalate crystals of a raw material.

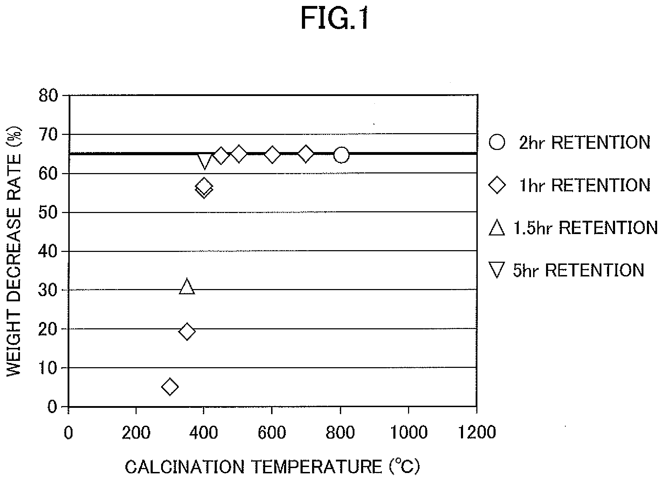

Fig. 1 is a graphic representation showing the relation between the calcination temperature and the weight decrease rate of a scandium compound obtained through calcination. As can be seen from this graph of Fig. 1 as well, a scandium compound having a weight decrease rate in the range of between 55% or more and 65% or less is generated by setting the calcination temperature to the range of between 400°C or more and 800°C or less.

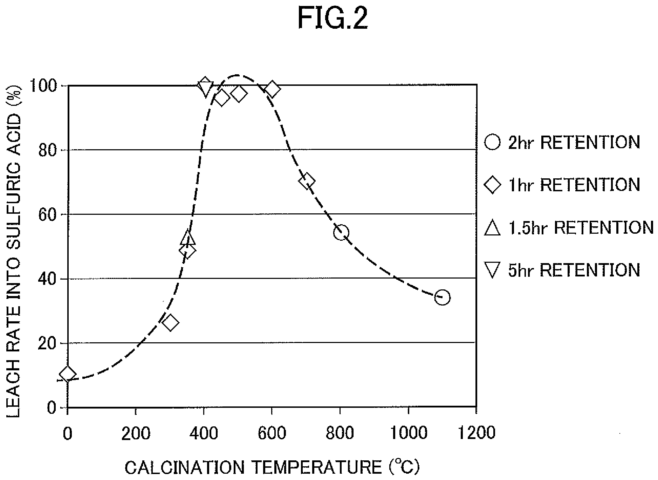

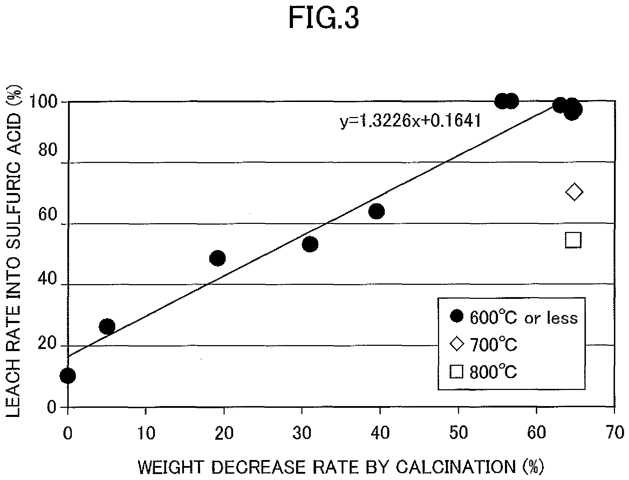

In addition, Fig. 2 is a graphic representation showing the relation between the calcination temperature and the leach rate of a scandium compound obtained through calcination into sulfuric acid. Furthermore, Fig. 3 is a graphic representation showing the relation between the weight decrease rate by calcination and the leach rate of a scandium compound obtained through calcination into sulfuric acid. Note that the leach rate into sulfuric acid is the leach rate of scandium into the sulfuric acid solution and indicates the degree of solubility of the scandium compound. As can be seen from these graphs of Fig. 2 and Fig. 3, the leach rate into sulfuric acid is 50% or more and the scandium compound is readily soluble in a sulfuric acid solution by setting the calcination temperature to the range of between 400°C or more and 800°C or less, that is, by calcining the scandium oxalate crystals so that the weight decrease rate of a scandium compound to be obtained is in the range of between 55% or more and 65% or less. Moreover, the leach rate into sulfuric acid becomes a high value of 95% or more and the scandium compound is particularly excellently readily soluble in a sulfuric acid solution by setting the calcination temperature to the range of between 400°C or more and 600°C or less.

Note that it can be seen from the graphs of Fig. 2 and Fig. 3 that the leach rate into sulfuric acid extremely decreases and it is required to perform the reaction for a long time in order to dissolve the scandium compound obtained when the calcination temperature is less than 400°C. In addition, it can be clearly seen that the leach rate into sulfuric acid extremely decreases again even when the calcination temperature exceeds 800°C and it can be seen that the scandium compound to be obtained performing calcination at such a high temperature is a poorly soluble calcined product which is completely in the form of scandium oxide.

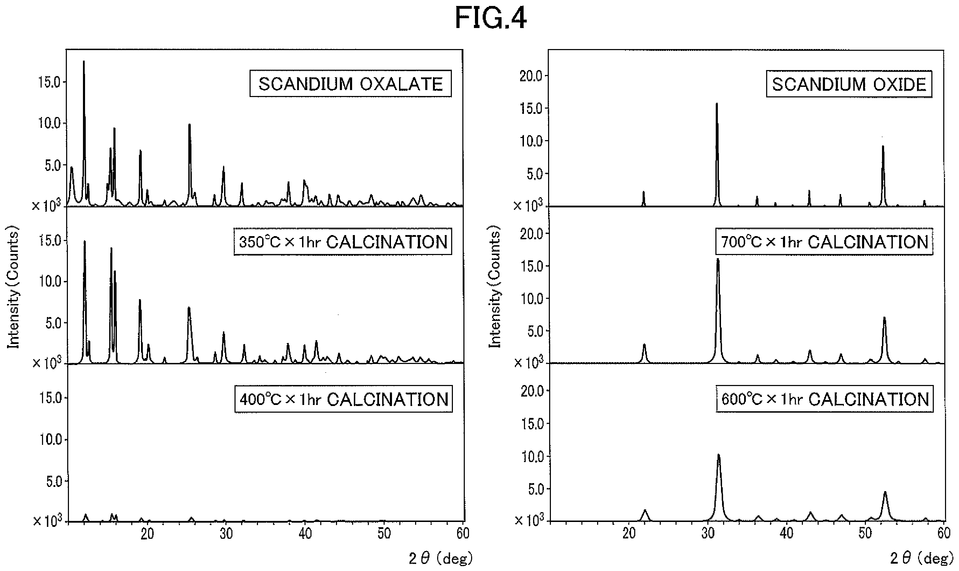

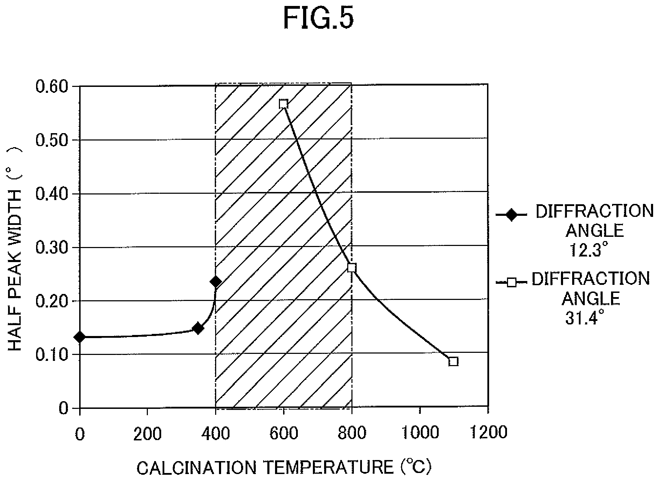

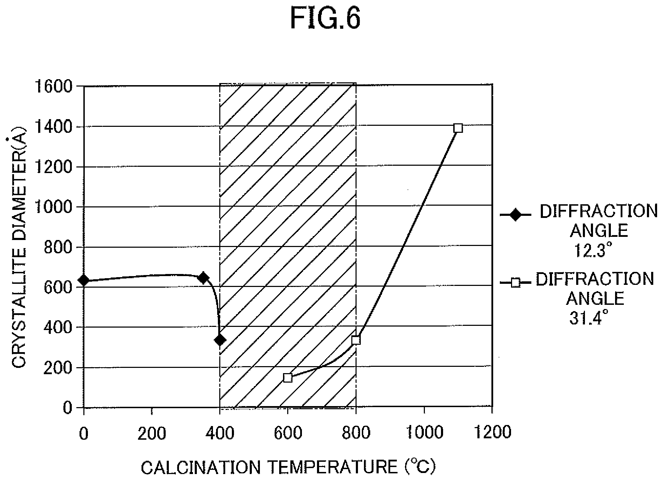

In addition, Fig. 4 is a diagram for illustrating the results on the X-ray diffraction (XRD) measurement of the respective scandium compounds obtained when the calcination time (retention time) is set to 1 hour and the calcination temperature is set to 350°C, 400°C, 600°C, and 700°C. Fig. 5 is a graphic representation showing the relation between the calcination temperatures of 0°C (without calcination), 350°C, 400°C, 600°C, 800°C, and 1100°C and the half peak width of a scandium compound obtained through calcination. Fig. 6 is a graphic representation showing the relation between the calcination temperatures of 0°C (without calcination), 350°C, 400°C, 600°C, 800°C, and 1100°C and the crystallite diameter of a scandium compound obtained through calcination. Note that the X-ray diffraction measurement is performed by using an X-ray diffractometer (XPert PRO, output: 45 kV 40 mA, slit: DS = 1/2° SS = 0.04 rad) manufactured by Malvern Panalytical Ltd.

As illustrated in Fig. 4, in the case of scandium compounds obtained by performing calcination at calcination temperatures of 400°C, 600°C, and 700°C, the peak intensity corresponding to the peak attributed to pure scandium oxalate is not detected but the peak intensity corresponding to the peak attributed to pure scandium oxide gradually increases in the case of performing the measurement by an X-ray diffraction method.

Specifically, the scandium compound exhibiting readily soluble property has properties that the half peak width at the diffraction angle $2\theta$ of 12.3° which appears in the case of pure scandium oxalate is 0.2 or more or is not detected and the half peak width at the diffraction angle $2\theta$ of 31.4° which appears in the case of pure scandium oxide is 0.2 or more or is not detected. As can be seen from the graphs of Fig. 4 and Fig. 5, the half peak width at the diffraction angle $2\theta$ of 12.3° is 0.2 or more and the peak at the diffraction angle $2\theta$ of 31.4° is not detected, for example, in the case of a scandium compound obtained by performing calcination at 400°C. In addition, the peak at the diffraction angle $2\theta$ of 12.3° is not detected and the peak at the diffraction angle $2\theta$ of 31.4° is 0.2 or more, for example, in the case of a scandium compound obtained by performing calcination at 600°C. In this way, the scandium compounds obtained by finely dividing the calcination temperature into from 400°C to 800°C have a low degree of crystallinity of scandium oxalate and scandium oxide and have readily soluble property.

Particularly in the scandium compounds obtained by performing calcination at a temperature of 400°C or more and 600°C or less, it can be seen that the degree of crystallinity decreases and excellent readily soluble property that the leach rate is 95% or more is exhibited. In the scandium compound in the region exhibiting excellent readily soluble property that the leach rate is 95% or more, the peak intensity of scandium oxide is 11000 counts or less and more preferably 2000 counts or less as illustrated in Fig. 4.

In addition, such a readily-soluble scandium compound has a property that the crystallite diameter calculated from the half peak width at the diffraction angles $2\theta$ of 12.3° and 31.4° based on the Scherrer equation is 350 Å or less. As can be seen from the graph of Fig. 6, the scandium compound obtained through calcination under a temperature condition of 400°C or more and 800°C or less has a crystallite diameter of 350 Å or less. It is considered that the scandium compound obtained by performing calcination at 400°C to 800°C has a crystallite diameter of 350 Å or less in this way, and as a result, the contact area of the scandium compound with an acid solution upon the dissolution thereof in the acid solution increases and thus readily soluble property is exhibited.

On the contrary, a scandium compound obtained by performing calcination at a high temperature (for example, 1100°C) as in the conventional case has an extremely large crystallite diameter as illustrated also in Fig. 6. In the case of a scandium compound to be obtained through such high-temperature calcination, it is presumed that dissolution of the scandium compound does not effectively proceed since the scandium compound is formed in an oxide, the crystallite diameter thereof increases, and the contact area thereof with an acid solution decreases.

Note that the term "crystallite diameter" as used herein refers to the value calculated from the half peak width of diffraction appearing in the diffraction pattern to be obtained by measurement using an X-ray diffraction measuring apparatus based on the following Scherrer equation which is generally known.

$$D = K \cdot \lambda / (\beta \cos\theta)$$

(Where D: crystallite diameter, $\lambda$: measured X-ray wavelength (Cu = 1.54056 Å), $\beta$: half peak width (rad), $\theta$: diffraction angle (°), and K: Scherrer constant (0.9).)

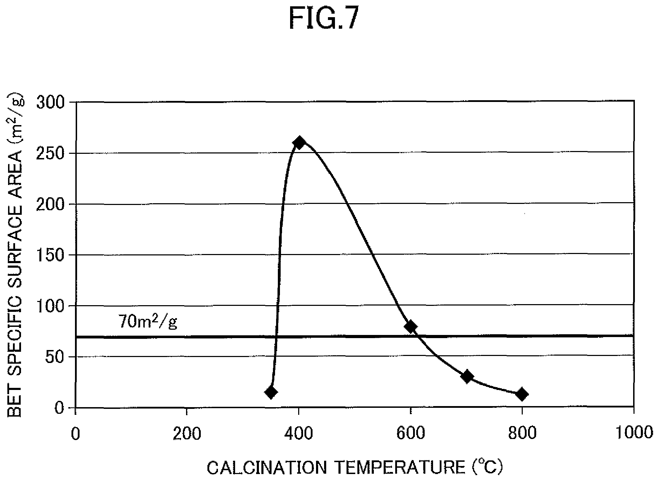

In addition, it is preferable that such a readily-soluble scandium compound has a property that the BET specific surface area thereof is 70 $m^2$/g or more from the viewpoint of obtaining readily soluble property that the leach rate is 95% or more. Fig. 7 is a graphic representation showing the measurement results on the BET specific surface area of a scandium compound obtained through calcination with respect to the calcination temperature. As can be seen from the graph of Fig. 7, the BET specific surface area of the scandium compound obtained through calcination under a temperature condition of 400°C or more and 600°C or less is 70 $m^2/g$ or more and the BET specific surface area of the scandium compound obtained through calcination by setting the calcination temperature to 400°C is 250 $m^2/g$ or more.

It is considered that the scandium compound obtained through calcination under a temperature condition of 400°C or more and 600°C or less has a large specific surface area in this way, and as a result, the contact area of the scandium compound with an acid solution upon the dissolution thereof in the acid solution increases and thus excellent readily soluble property that the leach rate is 95% or more is exhibited as described above. The specific surface area of the scandium compound is more preferably 100 $m^2/g$ or more, still more preferably 200 $m^2/g$ or more, and particularly preferably 250 $m^2/g$ or more.

Note that, in the scandium compound obtained by calcining the scandium oxalate crystals at a temperature of 400°C or more and 800°C or less as described above, it is possible to improve the readily soluble property thereof by adding water to the scandium compound, raising the temperature of the mixture to 60°C, and adding an acid such as hydrochloric acid or sulfuric acid to the mixture to adjust the pH in the range of 0 to 1.

EXAMPLES

Below, the present invention will be described in more detail with reference to Examples. Note that the present invention shall not in any sense be limited to these Examples.

(Hydrometallurgy process of nickel oxide ore)

Nickel oxide ore was leached with sulfuric acid by using an autoclave, and slaked lime was added to the leachate obtained to neutralize the leachate. Subsequently, a sulfurizing agent was added to the post-neutralization liquid obtained to cause a sulfuration reaction, nickel, cobalt and the like were separated from the post-neutralization liquid as sulfides, and a post-sulfuration liquid containing scandium was obtained.

(Ion exchange treatment and neutralization treatment)

Next, the post-sulfuration liquid obtained was subjected to an ion exchange treatment using a chelating resin and thus an eluate (scandium eluate) containing scandium eluted from the chelating resin was obtained as well as impurities in the solution were separated. Thereafter, a neutralizing agent was added to the scandium eluate to generate a precipitate of scandium hydroxide.

(Solvent extraction treatment)

Next, sulfuric acid was added to the precipitate of scandium hydroxide and the precipitate was redissolved to obtain a solution (scandium solution), this scandium solution was subjected to a solvent extraction treatment using an amine-based extractant, and thus a scandium sulfate solution was obtained as a raffinate liquid.

(Oxalate conversion treatment)

Next, the oxalate conversion treatment was performed using the scandium sulfate solution obtained and an oxalic acid solution. Specifically, the oxalate conversion starting liquid was added into the oxalic acid solution contained in the reaction vessel at a flow rate of about 0.5 L/min while stirring the oxalic acid solution to generate scandium oxalate crystals. Note that the stirring state was continuously maintained for 10 minutes after the entire amount of the oxalate conversion starting liquid was added into the oxalic acid solution. Thereafter, the entire amount of the resultant mixture was filtered to separate the scandium oxalate crystals. Note that the scandium content of the scandium oxalate crystals obtained was 23 mass%.

(Calcination treatment)

Next, the scandium oxalate crystals obtained was taken by 15 g for each, placed in a crucible, and set in the furnace. Without adjustment of the atmosphere, the internal temperature of the furnace was set to 300°C to 1100°C, the temperature was raised to a predetermined temperature over about 2 hours, and the predetermined temperature was maintained for 1 hour to 5 hours.

After the reaction, the calcined product was taken out from the furnace and the weight thereof was measured, and the proportion of weight decreased from the weight before calcination, namely, the weight decrease rate was calculated. In addition, the calcined product obtained was subjected to the X-ray diffraction measurement.

Subsequently, the sample after calcination was taken by 1 g to 3 g, water was added thereto, and the pH of the mixture was adjusted to the range of 0 to 1 by adding hydrochloric acid or sulfuric acid thereto while maintaining the temperature thereof at 60°C. Thereafter, the mixture was stirred for 30 minutes, then the entire amount of the resultant mixture was filtered for solid-liquid separation, and the amount of liquid thus obtained was measured and the scandium concentration in the liquid was measured to determine the leach rate of scandium. Note that this leach rate of scandium indicates the solubility of a scandium compound in an acid.

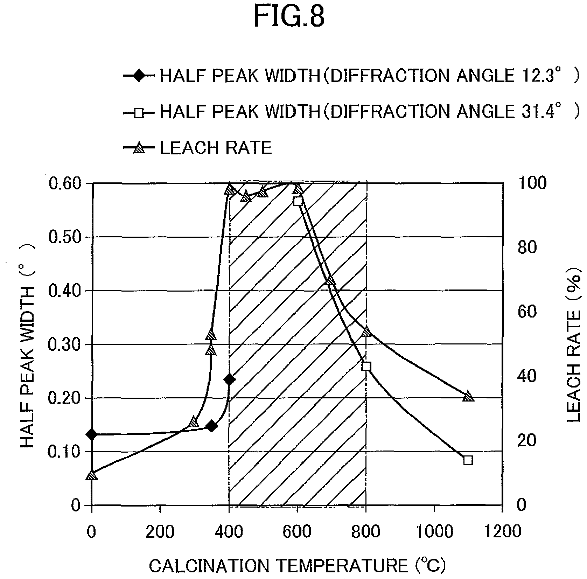

The results for Test Examples 1 to 13 in which the conditions such as the calcination temperature and the retention time in calcination were changed are presented in the following Table 1, specifically the weight decrease rate of the scandium compounds obtained through calcination and the leach rate when the scandium compounds are dissolved in an acid solution under predetermined conditions are presented in the following Table 1. In addition, the half peak width at the diffraction angles $2\theta$ of 12.3° and 31.4° and the crystallite diameter when the scandium compounds are subjected to X-ray diffraction measurement are presented in the following Table 2. The relation between the half peak width and leach rate of a scandium compound obtained through calcination with respect to the calcination temperature is illustrated in Fig. 8.

[Table 1]

| | Calcination | | | | | | Dissolution | | | | | | | |
| | Temperature (°C) | Time (hr) | | Sample (g) | | Weight decrease rate (%) | Weight of sample (g) | Acid | pH | Temperature (°C) | After dissolution | | | Leach rate (%) |
| | | Temperature increase | Retention | Before calcination | After calcination | | | | | | Amount of residue (g) | Filtrate (ml) | Sc concentration (g/L) | |
|---|---|---|---|---|---|---|---|---|---|---|---|---|---|---|
| Test Example 1 | 0 | - | - | - | - | 0 | 3.00 | HCl | 0 | 60 | 2.73 | 134 | 0.52 | 10 |
| Test Example 2 | 300 | 1 | 1 | 15.02 | 14.27 | 5.0 | 3.00 | $H_2SO_4$ | 0 | 60 | 2.15 | 146 | 1.3 | 26 |
| Test Example 3 | 350 | 1 | 1 | 15.20 | 12.29 | 19.1 | 3.00 | $H_2SO_4$ | 0 | 60 | 1.63 | 260 | 1.6 | 49 |
| | | | | | | | 3.00 | Hc1 | 0 | 60 | 2.47 | 201 | 1.2 | 28 |
| | | | | | | | 1.00 | HCl | 0 | 60 | 0.66 | 206 | 0.57 | 41 |
| Test Example 4 | 350 | 1 | 1.5 | 15.00 | 10.35 | 31.0 | 2.00 | $E_2SO_4$ | 0 | 60 | 1.17 | 79 | 4.5 | 53 |
| Test Example 5 | 400 | 1 | 1 | 15.26 | 6.60 | 56.7 | 3.00 | $H_2SO_4$ | 0 | 60 | 0 | 78 | 21 | 100 |
| Test Example 6 | 400 | 1 | 1 | 15.00 | 6.65 | 55.7 | 1.00 | $H_2SO_4$ | 0.2 | 60 | 0 | 65 | 7.7 | 100 |
| Test Example 7 | 400 | 1 | 5 | 15.00 | 5.55 | 63.0 | 1.00 | $H_2SO_4$ | 0.84 | 60 | 0 | 70 | 8.4 | 99 |
| Test Example 8 | 450 | 1 | 1 | 15.22 | 5.42 | 64.4 | 2.00 | $H_2SO_4$ | 0 | 60 | 0 | 113 | 11 | 96 |
| Test Example 9 | 500 | 1 | 1 | 15.00 | 5.28 | 64. 8 | 2.00 | $H_2SO_4$ | 0 | 60 | 0 | 116 | 11 | 98 |
| Test Example 10 | 600 | 1.5 | 1 | 15.00 | 5.31 | 64.6 | 1.00 | $H_2SO_4$ | 0 | 60 | 0.02 | 69 | 8.9 | 99 |
| Test Example 11 | 700 | 1.5 | 1 | 15.00 | 5.27 | 64.9 | 1.00 | $H_2SO_4$ | 0 | 60 | 0.22 | 62 | 7.1 | 70 |
| Test Example 12 | 800 | 2 | 2 | 100.99 | 35.64 | 64.7 | 1.00 | $H_2SO_4$ | 0 | 60 | 0.51 | 67 | 4.5 | 54 |

| | Calcination | | | | | | Dissolution | | | | | | | |
| | Temperature (°C) | Time (hr) | | Sample (g) | | Weight decrease rate (%) | Weight of sample (g) | Acid | pH | Temperature (°C) | After dissolution | | | Leach rate (%) |
| | | Temperature increase | Retention | Before calcination | After calcination | | | | | | Amount of residue (g) | Filtrate (ml) | Sc concentration (g/L) | |
| Test Example 13 | 1100 | 2 | 2 | 100.13 | 35.13 | 64.9 | 1.00 | $H_2SO_4$ | 0 | 60 | 0.71 | 54 | 4.1 | 34 |

[Table 2]

| | Calcination temperature (°C) | Diffraction angle: 12.3(°) | | Diffraction angle: 31.4(°) | |
|---|---|---|---|---|---|
| | | Half peak width (°) | Crystallite diameter (Å) | Half peak width (°) | Crystallite diameter (Å) |
| Test Example 1 | 0 | 0.13 | 631 | Not detected | Not detected |
| Test Example 4 | 350 | 0.15 | 636 | Not detected | Not detected |
| Test Example 5 | 400 | 0.23 | 330 | Not detected | Not detected |
| Test Example 10 | 600 | Not detected | Not detected | 0.57 | 146 |
| Test Example 12 | 800 | Not detected | Not detected | 0.26 | 328 |
| Test Example 13 | 1100 | Not detected | Not detected | 0.08 | 1380 |

As presented in Table 1, in Test Examples 5 to 12 in which the calcination temperature was set to the range of between 400°C or more and 800°C or less in the calcination treatment of the scandium oxalate crystals, the weight decrease rate by calcination was in the range of 56.7% to 64.7%. Moreover, the leach rate of scandium when the scandium compound obtained through calcination was dissolved in an acid was 54% or more. When the calcination temperature was in the range of between 400°C or more and 600°C or less, most of the scandium compound was dissolved in the acid as the leach rate of scandium was a high proportion of more than 95% or more. From these results, it has been found that the scandium compound obtained by calcining scandium oxalate at a calcination temperature in the range of between 400°C or more and 800°C or less exhibits readily soluble property and a scandium compound obtained by calcining scandium oxalate at a calcination temperature in the range of between 400°C or more and 600°C or less exhibits superior readily soluble property.

On the other hand, in the case of the scandium compound obtained by calcining scandium oxalate at a calcination temperature of less than 400°C or at a high temperature (1100°C) as in the conventional case, it has been found that the leach rate of scandium decreases and the scandium compound is a compound exhibiting poorly soluble property.

In addition, as presented in Table 2 and Fig. 8, it has been confirmed that the half peak width is 0.2 or more and the crystallite diameter is 350 Å or less in the case of scandium compounds exhibiting readily soluble property (Test Examples 5, 10, and 12). On the other hand, it has been confirmed that the half peak width is less than 0.2 and the crystallite diameter is more than 350 Å in the case of scandium compounds exhibiting poorly soluble property (Test Examples 1, 4, and 13) .

In addition, the results of analysis for the scandium compounds obtained in Test Example 7 (calcination conditions: 400°C × 5 h), Test Example 10 (calcination conditions: 600°C × 1 h), and Test Example 11 (calcination conditions: 700°C × 1 h) are presented in the following Table 3.

Note that the analysis of scandium compound was performed in the following manner. In other words, with regard to scandium (Sc), the remainder obtained by analyzing other impurities of 69 components by using ICP and ICP mass spectrometer (ICP-MS) and subtracting the amounts of these impurities from the total amount was regarded as the amount of scandium and evaluated. In addition, carbon (C) was measured by using an analyzer which worked by combination of high frequency induction heating and nondispersive infrared absorbing method and was manufactured by LECO Corporation.

[Table 3]

| | | | Test Example 7 | Test Example 10 | Test Example 11 | Test Example 13 |
|---|---|---|---|---|---|---|
| | | | 400°C × 5h | 600°C × 1h | 700°C × 1h | 1100°C × 2h |
| Element | oxide | Magnification | Result of analysis (ppm) | | | |
| Sc | $Sc_2O_3$ | 1.534 | 994,701 | 995,766 | 997,785 | 999,357 |

(continued)

|  |  |  | Test Example 7 | Test Example 10 | Test Example 11 | Test Example 13 |
|---|---|---|---|---|---|---|
|  |  |  | 400°C × 5h | 600°C × 1h | 700°C × 1h | 1100°C × 2h |
| Element | oxide | Magnification | Result of analysis (ppm) | | | |
| C | - | - | 4,800 | 3,700 | 1,700 | 200 |

As presented in Table 3, it has been confirmed that carbon C derived from oxalic acid of scandium oxalate is decomposed and removed in the case of performing calcination at a high temperature (1100°C or more) as in the conventional case but a large amount of carbon C remains in the scandium compound obtained by performing calcination at a calcination temperature set to the range of 800°C or less.

In addition, the BET specific surface area measured for the scandium compounds obtained in Test Example 3 (calcination conditions: 350°C × 1 h), Test Example 6 (calcination conditions: 400°C × 1 h), Test Example 10 (calcination conditions: 600°C × 1 h), and Test Example 11 (calcination condition: 700°C × 1 h) is presented in the following Table 4. Note that the BET specific surface area was measured by using a specific surface area and pore distribution measuring apparatus (QUADRASORB SI manufactured by Quantachrome Instruments).

[Table 4]

|  | Calcination | | BET specific surface area ($m^2/g$) |
|---|---|---|---|
|  | Temperature (°C) | Retention time (hr) |  |
| Test Example 3 | 350 | 1 | 16 |
| Test Example 6 | 400 | 1 | 260 |
| Test Example 10 | 600 | 1 | 79 |
| Test Example 11 | 700 | 1 | 30 |

As presented in Table 4, the BET specific surface area of the scandium compounds obtained by performing calcination at a temperature in the range of 400°C or more is larger as compared with the case in which calcination is performed at 350°C.

Claims

1.  A method for producing a scandium compound, comprising:

    subjecting a solution containing scandium to an oxalate conversion treatment using oxalic acid to separate the solution into a liquid and a scandium oxalate crystal; and
    subjecting the scandium oxalate crystal obtained to a calcination treatment under a temperature condition in a range of between 400°C or more and 600°C or less to obtain a scandium compound.

2.  A method for producing a scandium compound, comprising:

    subjecting a solution containing scandium to an oxalate conversion treatment using oxalic acid to separate the solution into a liquid and a scandium oxalate crystal; and
    subjecting the scandium oxalate crystal obtained to a calcination treatment under a temperature condition in a range of between 400°C or more and 800°C or less to obtain a scandium compound.

3.  The method for producing a scandium compound according to claim 1 or 2, wherein the scandium oxalate crystal is retained for 1 hour or more and 12 hours or less to be calcined in the calcination treatment.

4.  The method for producing a scandium compound according to any one of claims 1 to 3, wherein a weight decrease rate of the scandium compound obtained by the calcination treatment with respect to a weight of the scandium oxalate crystal before the calcination treatment is in a range of between 55% or more and 65% or less.

**5.** The method for producing a scandium compound according to any one of claims 1 to 4, wherein the solution containing scandium is obtained by subjecting a solution containing scandium to an ion exchange treatment and/or a solvent extraction treatment.

**6.** A scandium compound, wherein a half peak width at a diffraction angle $2\theta$ of 12.3° measured by an X-ray diffraction method is 0.2 or more or is not detected and a half peak width at a diffraction angle $2\theta$ of 31.4° is 0.2 or more or is not detected.

**7.** The scandium compound according to claim 6, wherein a crystallite diameter calculated from the half peak width at a diffraction angle $2\theta$ of 12.3° or 31.4° based on Scherrer equation is 350 Å or less.

**8.** The scandium compound according to claim 6 or 7, wherein a BET specific surface area of the scandium compound is 70 $m^2$/g or more, and
a peak intensity of scandium oxide measured by an X-ray diffraction method is 11000 counts or less.

# FIG.1

# FIG.2

# FIG.3

# FIG.4

# FIG.5

# FIG.6

# FIG.7

# FIG.8

→◆— HALF PEAK WIDTH(DIFFRACTION ANGLE 12.3° )

—□— HALF PEAK WIDTH(DIFFRACTION ANGLE 31.4° )

—▲— LEACH RATE

## INTERNATIONAL SEARCH REPORT

| | International application No. |
|---|---|
| | PCT/JP2017/030119 |

**A. CLASSIFICATION OF SUBJECT MATTER**
*C22B59/00*(2006.01)i, *C22B1/02*(2006.01)i, *C22B3/44*(2006.01)i

According to International Patent Classification (IPC) or to both national classification and IPC

**B. FIELDS SEARCHED**

Minimum documentation searched (classification system followed by classification symbols)
C22B59/00, C22B1/02, C22B3/44

Documentation searched other than minimum documentation to the extent that such documents are included in the fields searched
Jitsuyo Shinan Koho         1922-1996   Jitsuyo Shinan Toroku Koho   1996-2017
Kokai Jitsuyo Shinan Koho   1971-2017   Toroku Jitsuyo Shinan Koho   1994-2017

Electronic data base consulted during the international search (name of data base and, where practicable, search terms used)
JSTPlus/JST7580/JSTChina(JDreamIII), CiNii

**C. DOCUMENTS CONSIDERED TO BE RELEVANT**

| Category* | Citation of document, with indication, where appropriate, of the relevant passages | Relevant to claim No. |
|---|---|---|
| X<br>A | JP 09-324227 A  (Mitsubishi Materials Corp.),<br>16 December 1997 (16.12.1997),<br>paragraphs [0023] to [0024]<br>(Family: none) | 2-7<br>1,8 |
| X<br>A | CN 103361486 B  (PANZHIHUA JINGYAN TECHNOLOGY CO., LTD.),<br>29 October 2014 (29.10.2014),<br>claims; paragraphs [0050] to [0063]<br>(Family: none) | 2-7<br>1,8 |
| A | WO 2016/084830 A1  (Sumitomo Metal Mining Co., Ltd.),<br>02 June 2016 (02.06.2016),<br>paragraphs [0091] to [0104]<br>& AU 2015351446 A        & CN 107002176 A | 1-8 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 September 2017 (22.09.17) | 03 October 2017 (03.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2017/030119

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2015/122397 A1  (Kansai University),<br>20 August 2015 (20.08.2015),<br>paragraphs [0057] to [0058]<br>& CN 105793447 A        & AU 2015216225 A | 1-8 |
| A | JP 09-208222 A  (Pacific Metals Co., Ltd.),<br>12 August 1997 (12.08.1997),<br>paragraph [0038]<br>(Family: none) | 1-8 |

Form PCT/ISA/210 (continuation of second sheet) (January 2015)

**EP 3 508 593 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014218719 A